# EUROPÄISCHE PATENTSCHRIFT

(11) **EP 3 626 949 B1**
(45) Veröffentlichungstag und Bekanntmachung des Hinweises auf die Patenterteilung: **02.03.2022**
(21) Anmeldenummer: 18465573.6
(22) Anmeldetag: 18.09.2018
(51) Int. Cl.: F02D 9/04, F16K 1/44, F16K 11/04, F16K 25/00, F02M 26/66, F02M 26/69

(54) **VENTIL**
VALVE
SOUPAPE

(43) Veröffentlichungstag der Anmeldung: 25.03.2020
(73) Patentinhaber: Vitesco Technologies GmbH, 93055 Regensburg (DE)
(72) Erfinder: Petca, Eduard Cornel, 300693 Timisoara (RO)
(74) Vertreter: Vitesco Technologies

(56) Entgegenhaltungen:
- EP-A1- 1 798 456
- EP-A1- 2 829 685
- AT-B- 250 106
- CH-A5- 679 066
- DE-A1-102007 017 814
- DE-A1-102007 049 171
- JP-A- H0 972 250
- US-A- 2 720 219
- US-A1- 2005 279 956
- US-A1- 2014 264 133

## Beschreibung

Die Erfindung betrifft ein Ventil, insbesondere zum Öffnen und Schließen von Abgasleitungen. Ein solches Ventil weist ein Gehäuse und einen darin angeordneten Stößel auf, der mit einem Antrieb koppelbar ist und ausgebildet ist, mittels des Antriebs entlang einer Längsachse des Stößels bewegt zu werden. Im Gehäuse ist ein Ventilsitz angeordnet, der eine Ventilöffnung begrenzt, die mittels eines am Stößel angeordneten Ventilkörpers abdichtend geschlossen beziehungsweise freigegeben werden kann. Solche Ventile werden typischerweise zum Öffnen und Verschließen von Abgasleitungen in Kraftfahrzeugen eingesetzt und sind aus dem Stand der Technik bekannt. Wichtig für die Funktion solcher Ventile ist die Dichtheit, mit der das Ventil die Leitung verschließt. Gerade bei Gasen ist das Erreichen einer geringen Leckrate mit hohem Aufwand verbunden. Beispielsweise ist entscheidend, die Position des Ventilkörpers zu bestimmen, um so das Öffnen und Schließen des Ventils regeln zu können. Der Antrieb des Stößels wird typischerweise von einem Elektromotor und einem Getriebe gebildet. Das Getriebe dient dazu, die Drehbewegung des Elektromotors in eine translatorische Bewegung umzuwandeln, damit der mit dem Getriebe verbundene Stößel den Ventilkörper linear bewegen kann.

Die AT 250 106 B, DE 10 2007 0491471 A1 und DE 10 2007 017814 A1 offenbaren Ventile mit Ventilkörpern.

Eine Aufgabe, die der Erfindung zugrunde liegt, ist es, ein Konzept für ein Ventil anzugeben, welches eine besonders hohe Dichtheit des Ventils im Betrieb ermöglicht.

Anspruch 1 offenbart das erfindungsgemäße Ventil. Das Ventil weist eine im Gehäuse ausgebildete Ausnehmung auf. Das Ventil weist einen in der Ausnehmung des Gehäuses angeordneten Ventilsitz auf, der eine Ventilöffnung begrenzt. Das Ventil weist eine weitere Ventilöffnung auf, die durch die im Gehäuse ausgebildete Ausnehmung begrenzt ist. Das Ventil weist einen Ventilkörper auf, der fest mit dem Stößel verbunden ist. Der Ventilkörper ist so ausgebildet, dass der Ventilkörper durch eine Bewegung des Stößels zwischen einer Offenstellung, in der die Ventilöffnung freigegeben ist, und einer Schließstellung betätigbar ist. Der Ventilkörper ist weiter so ausgebildet, dass dieser in der Schließstellung an dem Ventilsitz zum Verschließen der Ventilöffnung und an dem Gehäuse zum Verschließen der weiteren Ventilöffnung jeweils abdichtend anliegt. Der Ventilkörper weist einen ersten Kontaktbereich, der in der Schließstellung an dem Ventilsitz anliegt zur Ausbildung einer ersten Dichtung, und einen zweiten Kontaktbereich auf, der in der Schließstellung an dem Gehäuse anliegt zur Ausbildung einer zweiten Dichtung. Der Ventilkörper ist scheiben- oder tellerartig ausgebildet und um den Stößel angeordnet. Der Ventilkörper ist auf einer den Ventilöffnungen zugewandten Seite stufenartig ausgebildet, wobei jede Stufe einen Kontaktbereich ausbildet. Der Ventilsitz ist bezüglich der Längsachse des Stößels relativ zu dem Stößel verschiebbar gelagert. Der Ventilsitz weist einen in radialer Richtung bezüglich der Längsachse umlaufenden Vorsprung auf, der in eine im Gehäuse ausgebildete Nut eingreift, wobei die Nut ausgebildet ist, die Verschiebbarkeit des Ventilsitzes zwischen zwei Endstellungen zu begrenzen. Zwischen dem Ventilsitz und einem der weiteren Ventilöffnung gegenüberliegenden Absatz des Gehäuses ist ein Federelement in der Ausnehmung angeordnet, welches derart ausgebildet ist, dass das Federelement eine Kraft auf den Ventilsitz in Richtung des Ventilkörpers aufbringt.

Das beschriebene Ventil zeichnet sich dadurch aus, dass in Schließstellung neben der Ventilöffnung des Ventilsitzes zusätzlich die Ausnehmung auf einer Auslassseite (Fluidauslassseite) mittels eines Ventilkörpers abgedichtet ist. Der Ventilkörper ist aufgrund seiner festen Kopplung mit dem Stößel mittels des Stößels bewegbar und so ausgebildet, dass dieser in der Schließstellung beide Öffnungen schließen kann. Dadurch sind an einem Ventilsitz mittels eines Ventilkörpers zwei Ventildichtungen beziehungsweise zwei Ventilfunktionen ermöglicht. Dies ermöglicht eine besonders effektive Dichtheit des Ventils, da durch den Ventilkörper für eine Ventilöffnung eine redundante Dichtung ermöglicht ist und im Falle einer Leckage bei der Ventilöffnung im Ventilsitz immer noch die Dichtheit über die weitere Ventilöffnung erzielt werden kann. Dadurch kann beispielsweise auf einen zusätzlichen Ventilsitz verzichtet und damit Kosten eingespart werden. Es wird zudem zu einer kostengünstigen Herstellung eines solchen Ventils beigetragen.

Das beschriebene Ventil eignet sich insbesondere für Linearventile, bei denen der Stößel entlang einer Richtung, insbesondere seiner Längsachse, linear bewegt wird. Weiterhin kann das Ventil auch einen weiteren Ventilsitz mit einer weiteren Ventilöffnung aufweisen (Doppellinearventil), die gleichzeitig zur ersten Ventilöffnung durch die Stößelbewegung mittels einer entsprechenden Ventilkörpervorrichtung verschlossen oder freigegeben werden kann.

Beispielsweise ist das Ventil in einem Abgasrückführsystem eines Kraftfahrzeugs einsetzbar, um die Abgasleitung des Kraftfahrzeugs zu öffnen und zu schließen. Beispielsweise weist ein Abgasrückführsystem eines Kraftfahrzeugs das Ventil auf.

Als Ventilsitz wird bevorzugt ein einstückiges Bauteil verstanden, welches in der Ausnehmung im Gehäuse angeordnet ist, etwa eingepresst oder leicht verschiebbar, und den Dichtkontakt mit dem Ventilkörper herstellt. Über die Ventilöffnung beziehungsweise die weitere Ventilöffnung kann Fluid, etwa Abgas, ausströmen. Die weitere Ventilöffnung und die Ventilöffnung liegen bezüglich der Längsachse des Stößels auf einer gemeinsamen Seite, etwa der Auslassseite. Mit anderen Worten sind die beiden Öffnungen axial in einem gemeinsamen Bereich bezüglich der Längsachse angeordnet. Die Ausnehmung ist hinsichtlich ihrer Innenkontur an die Außenkontur des Ventilsitzes angepasst, zumindest in Umfangsrichtung bezüglich der Längsachse des Stößels. Der Ventilsitz und die Ausnehmung sind beispielsweise zylinderförmig ausgebildet. Bevorzugt sind die Ausnehmung und der Ventilsitz rotationssymmetrisch ausgebildet.

Erfindungsgemäß weist der Ventilkörper einen ersten Kontaktbereich, der in der Schließstellung an dem Ventilsitz anliegt zur Ausbildung einer ersten Dichtung, und einen zweiten Kontaktbereich auf, der in der Schließstellung an dem Gehäuse anliegt zur Ausbildung einer zweiten Dichtung. Dadurch sind in der Schließstellung sowohl die Ventilöffnung als auch die weitere Ventilöffnung durch den Ventilkörper abdichtbar. Dies ermöglicht die oben genannten Vorteile und Funktionen. Der Ventilkörper bildet in der Schließstellung zwei separate Kontaktbereiche aus, die jeweils mit einem entsprechenden Gegenkontaktbereich des Ventilsitzes beziehungsweise des Gehäuses in Schließstellung in Kontakt treten.

Die Kontaktbereiche, auch Kontaktabschnitte genannt, sind beispielsweise um die Längsachse des Stößels herum umlaufend ausgebildet. Beispielsweise sind die Kontaktbereiche ringförmig oder zylinderförmig vollständig um die Längsachse umlaufend. Der Ventilkörper ist beispielsweise rotationssymmetrisch ausgebildet. Die beiden Kontaktbereiche können auch als Dichtflächen oder Dichtbereiche bezeichnet werden. Die Kontaktbereiche sind insbesondere beabstandet zueinander ausgebildet. Der erste Kontaktbereich liegt beispielsweise radial bezüglich der Längsachse näher am Stößel als der zweite Kontaktbereich. Zusätzlich oder alternativ können die beiden Kontaktbereiche bezüglich der Längsachse axial versetzt zueinander sein. Mit anderen Worten sind die beiden Kontaktbereiche beispielsweise axial und/oder radial zueinander beabstandet. Erfindungsgemäß ist der Ventilkörper teller- oder scheibenartig und um den Stößel herum ausgebildet. Die tellerartige Ausgestaltung ermöglicht zudem eine einfache und kostengünstige Herstellung. Weiterhin kann damit auf einfache Weise eine Gemäß einer Ausführungsform ist in der Schließstellung der Ventilsitz derart innerhalb der Ausnehmung angeordnet, dass ein axiales Ende des Ventilsitzes, welches die Ventilöffnung aufweist, bezogen auf die Längsachse beabstandet von einem axialen Ende der Ausnehmung des Gehäuses, welches die weitere Ventilöffnung aufweist, ist. Mit anderen Worten liegt das axiale Ende des Ventilsitzes in der Schließstellung innerhalb der Ausnehmung und ragt nicht aus dieser heraus. Beispielsweise sind Abdichtung beider Öffnungen erreicht werden. Mit anderen Worten handelt es sich bei dem Ventil um ein Tellerventil.

Erfindungsgemäß ist der Ventilsitz bezüglich der Längsachse des Stößels relativ zu dem Stößel verschiebbar gelagert. Dadurch kann eine besonders effektive Dichtung erreicht werden. Beispielsweise können dadurch Toleranzen kompensiert werden. Beispielsweise ist eine zweistufige Abdichtung während des Schließens des Ventils ermöglicht, bei der der Ventilkörper zunächst am Ventilsitz anliegt, diesen anschließend in die Ausnehmung verschiebt und dann am Gehäuse anliegt zum Abdichten der weiteren Ventilöffnung.

Erfindungsgemäß weist der Ventilsitz einen in radialer Richtung bezüglich der Längsachse umlaufenden Vorsprung auf, der in eine im Gehäuse ausgebildete Nut eingreift, wobei die Nut ausgebildet ist, die Verschiebbarkeit des Ventilsitzes zwischen zwei Endstellungen zu begrenzen. Dadurch kann der Ventilsitz lediglich zwischen definierten Endpositionen bezüglich der Längsachse axial verschoben werden. Die Bewegbarkeit des Ventilsitzes ist dadurch formschlüssig begrenzt.

Erfindungsgemäß ist zwischen dem Ventilsitz und einem der weiteren Ventilöffnung gegenüberliegenden Absatz des Gehäuses ein Federelement in der Ausnehmung angeordnet, welches derart ausgebildet ist, dass das Federelement eine Kraft auf den Ventilsitz in Richtung des Ventilkörpers aufbringt. Dadurch wird der Ventilsitz in Richtung des Ventilkörpers beziehungsweise gegen diesen gedrückt. Dadurch wird zu einer besonders guten Dichtung der Ventilöffnung beigetragen.

Gemäß einer Ausführungsform ist der Ventilkörper mit dem Stößel verschweißt. Dies ermöglicht eine sichere und langzeitstabile Verbindung. Zudem ist eine einfache und kostengünstige Herstellung ermöglicht.

Gemäß einer Ausführungsform verlaufen die beiden Kontaktbereiche schräg zur Längsachse. Beispielsweise sind die beiden Kontaktbereiche angefast oder winklig zur Längsachse des Stößels ausgebildet. Dies trägt zu einer sicheren Abdichtung bei. Weiterhin wird zu einer Zentrierung in der jeweiligen Öffnung beigetragen.

Gemäß einer Ausführungsform ist in der Schließstellung der Ventilsitz derart innerhalb der Ausnehmung angeordnet, dass ein axiales Ende des Ventilsitzes, welches die Ventilöffnung aufweist, bezogen auf die Längsachse beabstandet von einem axialen Ende der Ausnehmung des Gehäuses, welches die weitere Ventilöffnung aufweist, ist. Mit anderen Worten liegt das axiale Ende des Ventilsitzes in der Schließstellung innerhalb der Ausnehmung und ragt nicht aus dieser heraus. Beispielsweise sind die beiden axialen Enden und damit die beiden Öffnungen bezüglich der Längsachse des Stößels nur leicht, wenige Millimeter oder Zehntel Millimeter, voneinander beabstandet. Dies ermöglicht eine kompakte Bauweise des Ventilkörpers, insbesondere eine flache Bauweise, wobei dieser aufgrund des geringen axialen Abstands beide Öffnungen wirksam abdichten kann.

Gemäß einer Ausführungsform ragt in einem entspannten Zustand des Federelements ein axiales Ende des Ventilkörpers, welches die Ventilöffnung aufweist, aus der Ausnehmung heraus, so dass bei einem Schließvorgang des Ventils (durch Betätigung des Ventilkörpers mittels des angetriebenen Stößels) zunächst der Ventilkörper an dem Ventilsitz anliegt und anschließend der Ventilsitz gegen die Federkraft so in die Ausnehmung drückbar beziehungsweise verschiebbar ist, dass der Ventilkörper in der Schließstellung am Gehäuse zum Schließen der weiteren Ventilöffnung anliegt. Mit anderen Worten wird der Ventilkörper in die Schließstellung überführt, wobei der Ventilkörper erst den Ventilsitz berührt und diesen während des Anliegens in die Ausnehmung schiebt. Die nötige Kraft wird vom Stößel auf den Ventilkörper übertragen, wobei die übertragene Kraft zumindest größer ist als eine maximale Federkraft des Federelements. Das Federelement sorgt während des Schließens (nach der Erstberührung) und in der Schließstellung stets für einen ausreichenden Kontakt des Ventilsitzes mit dem Ventilkörper, sodass die Ventilöffnung sicher abdichtbar ist. Dadurch wird zu den oben genannten Vorteilen und Funktionen beigetragen.

Hier und im Folgenden gilt, dass für die axiale Verschiebbarkeit des Ventilsitzes ein Spalt zwischen Ausnehmung und Ventilsitz vorhanden sein muss. Dieser ist jedoch so gering, dass keine oder nur eine unwesentliche Leckage auftritt. Beispielsweise sind der Außendurchmesser des Ventilsitzes und der Innendurchmesser der Ausnehmung nominell in etwa gleich. Beispielsweise handelt es sich um eine Spielpassung.

In den Figuren zeigen:
- Figur 1: eine schematische Schnittansicht eines exemplarischen und nicht erfindungsgemäßen Ventils,
- Figur 2: eine schematische, perspektivische Ansicht eines Ventils gemäß einem Ausführungsbeispiel der Erfindung,
- Figur 3: eine schematische Aufsicht auf das Ventil gemäß Figur 2,
- Figur 4: eine schematische Schnittansicht des Ventils gemäß Figur 2 in einer Schließstellung,
- Figur 5: eine schematische, vergrößerte Teilansicht der Figur 4,
- Figur 6: eine schematische Schnittansicht des Ventils gemäß Figur 2 in einer Zwischenstellung, und
- Figur 7: eine schematische, vergrößerte Teilansicht der Figur 6.

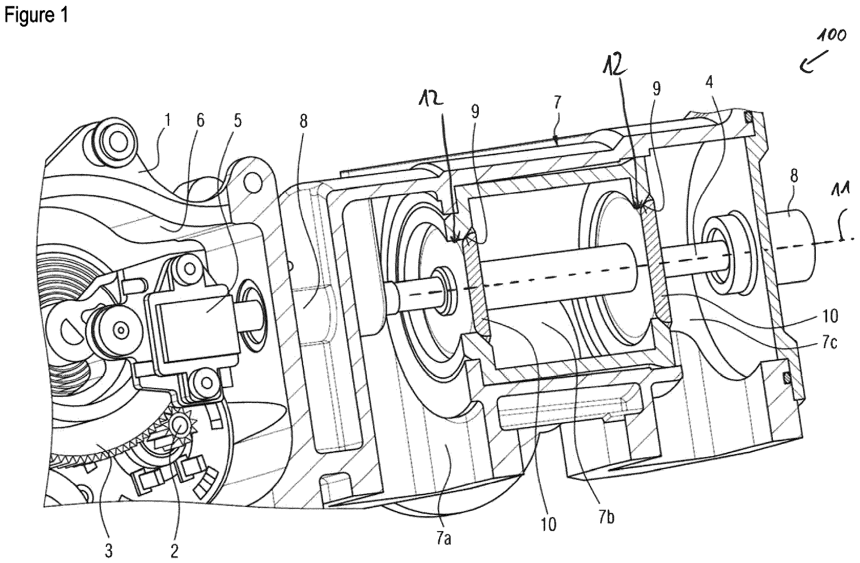

Das nicht erfingsgemäße Ventil 100 in Figur 1 weist ein Gehäuse 1 auf, in dem ein Elektromotor 2 angeordnet ist. Mittels eines Getriebes 3 wird die Drehbewegung des Elektromotors 2 in eine lineare Bewegung eines Stößels 4, der im Gehäuse 1 gelagert ist, umgewandelt. Am Getriebe 3 ist ein Sensor 5 angeordnet, der mit einem am Stößel 4 befestigten Magneten zusammenwirkt. Der Stößel 4 erstreckt sich von einer Getriebekammer 6 bis in eine Ventilkammer 7, wobei der Stößel 4 an zwei Stellen 8 gelagert ist. Die Ventilkammer 7 besteht aus drei hintereinander liegenden Teilkammern 7a, 7b, 7c, die jeweils durch einen Ventilsitz 9 voneinander getrennt sind. Zwei Ventilkörper 10 sind so auf dem Stößel 4 fest angeordnet, dass sie bei einer linearen Bewegung des Stößels 4 entlang einer Längsachse 11 des Stößels 4 an den jeweiligen Ventilsitz 9 anliegen und eine entsprechende Ventilöffnung 12 abdichten können oder sich vom Ventilsitz 9 wegbewegen und die entsprechende Ventilöffnung 12 somit freigeben können, so dass ein Gas von einer Ventilkammer 7 in eine andere strömen kann.

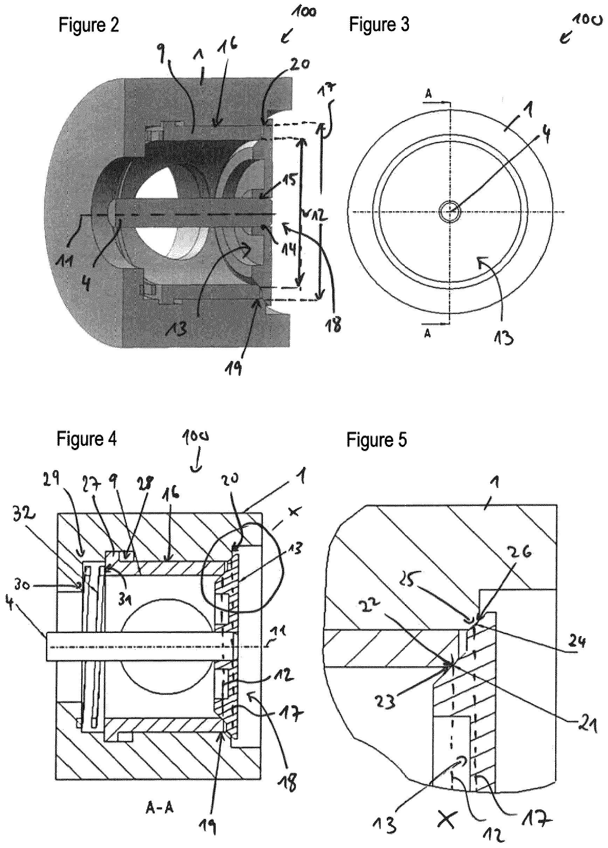

Im Folgenden wird ein Ventil 100 gemäß einem Ausführungsbeispiel der Erfindung beschrieben, welches eine verbesserte Abdichtung einer Ventilöffnung 12 aufweist. Das zu beschreibende Ventil 100 kann, muss aber nicht Merkmale der anhand von Figur 1 beschriebenen Ausgestaltung aufweisen. Die Figuren 2 bis 7 zeigen jeweils nur relevante Ausschnitte des Ventils 100, wobei aus Gründen der Übersichtlichkeit auf die Darstellung von Einzelheiten und anderen Merkmalen verzichtet ist.

Figur 2 zeigt einen perspektivischen Ausschnitt des Ventils 100 gemäß dem Ausführungsbeispiel der Erfindung. Dargestellt ist ein Ventilsitz 9, der eine Ventilöffnung 12 begrenzt. An dem Stößel 4 ist ein tellerartiger Ventilkörper 13 angeordnet. Der Ventilkörper 13 ist ringförmig um die Längsachse 11 des Stößels 4 umlaufend ausgebildet und hat einen zylindrischen Abschnitt 15, mittels welchem dieser auf den Stößel 4 aufgeschoben und/oder aufgepresst ist. Der Ventilkörper 13 ist fest mit dem Stößel 4 verschweißt. In Figur 2 ist eine Verschweißungsstelle 14 des Ventilkörpers 13 mit dem Stößel 4 exemplarisch gekennzeichnet. Der Ventilsitz 9 ist in einer Ausnehmung 16 des Gehäuses 1 angeordnet. Die Ausnehmung 16 begrenzt eine weitere Ventilöffnung 17 (zweite Ventilöffnung). Die zweite Ventilöffnung 17 und die Ventilöffnung 12 (erste Ventilöffnung) sind auf einer gemeinsamen Seite angeordnet, etwa einer Auslassseite 18, über die Fluid ausströmen kann. Mit anderen Worten sind die beiden Öffnungen 12 und 17 in einem gemeinsamen Bereich bezüglich der Längsachse 11 des Stößels 4 angeordnet. Die Öffnungen 12, 17 sind jeweils an axialen Enden 19 und 20 des Ventilsitzes 9 beziehungsweise der Ausnehmung 16 bezüglich der Längsachse 11 angeordnet. Die axialen Enden 19, 20 weisen zur selben Seite, beispielsweise der Auslassseite 18, hin. Die Ausnehmung 16 und der Ventilsitz 9 sind hinsichtlich ihrer körperlichen Ausgestaltung aufeinander angepasst. Die Ausnehmung 16 ist zylindrisch ausgebildet, während der Ventilsitz 9 eine korrespondierende zylinderförmige Ausgestaltung hat. Insbesondere sind die Ausnehmung 16 und der Ventilsitz 9 rotationssymmetrisch ausgebildet.

Figur 3 zeigt eine Aufsicht auf das Ventil 100.

Durch die feste Kopplung mit dem Stößel 4 ist der Ventilkörper 13 linear entlang der Längsachse 11 zwischen einer Offenstellung und einer Schließstellung verstellbar. Die Betätigung des Stößels 4 kann optional federunterstützt sein.

Figuren 4 und 5 zeigen Schnittansichten des Ventils 100 gemäß der in Figur 3 eingezeichneten Schnittebene A-A. Es ist die Schließstellung des Ventils 100 gezeigt.

Der Ventilkörper 13 ist so ausgebildet, dass dieser in der Schließstellung zum einen die erste Ventilöffnung 12 und zum anderen die zweite Ventilöffnung 17 verschließt. Hierzu ist der Ventilkörper 13 so ausgebildet, dass dieser einen ersten Kontaktbereich 21 aufweist, der in der Schließstellung mit einem entsprechenden ersten Gegenkontaktbereich 22 des Ventilsitzes 9 in Kontakt ist, das heißt an diesem abdichtend anliegt. Dabei ist eine erste Dichtung 23 (auch Dichtbereich oder Dichtfläche) ausgebildet. Analog weist der Ventilkörper 13 einen zweiten Kontaktbereich 24 auf, der in der Schließstellung mit einem entsprechenden zweiten Gegenkontaktbereich 25 des Gehäuses 1 in Kontakt ist, das heißt an diesem abdichtend anliegt. Dabei ist eine zweite Dichtung 26 (auch Dichtbereich oder Dichtfläche) ausgebildet. Die beiden Kontaktbereiche 21 und 24 verlaufen schräg zur Längsachse 11 und sind radial und axial bezogen auf die Längsachse beabstandet zueinander angeordnet. Mit anderen Worten ist der scheiben- oder tellerartige Ventilkörper 13 auf einer den Öffnungen 12, 17 zugewandten Seite stufenartig ausgebildet, wobei jede Stufe (auch Absatz genannt) einen Kontaktbereich ausbildet. Zudem ist das Ventil 100 so ausgebildet, dass der Ventilsitz 9 in der Schließstellung in der Ausnehmung 16 so angeordnet ist, dass dieser nicht aus dieser herausragt. Vielmehr ist das axiale Ende 19 dessen, welches die Ventilöffnung 12 aufweist, innerhalb der Ausnehmung 16 und beabstandet von dem axialen Ende 20 der Ausnehmung, welches die zweite Ventilöffnung 17 aufweist.

Der Ventilsitz 9 ist innerhalb der Ausnehmung 16 zudem bezüglich der Längsachse 11 verschiebbar angeordnet, insbesondere bezüglich des Stößels 4 beziehungsweise des Gehäuses 1. Hierzu ist ein Spalt zwischen Ventilsitz 9 und Ausnehmung 16 in radialer Richtung bezüglich der Längsachse vorgesehen (nicht ersichtlich in den Figuren), der jedoch keine oder nur eine unwesentliche Leckage zwischen Ventilsitz 9 und Ausnehmung 16 zulässt. Beispielsweise ist eine Übergangs- oder Spielpassung ausgebildet. Die Längsverschiebbarkeit ist durch zwei Endstellungen begrenzt. Hierzu hat der Ventilsitz 9 an seiner Außenseite einen umlaufenden Vorsprung 27, der formschlüssig in eine Nut 28 eingreift, die im Gehäuse 1 im Bereich der Ausnehmung 16 ausgebildet ist. Der Vorsprung 27 und die Nut 28 erlauben ein definiertes Verschieben des Ventilsitzes 9 entlang der Längsachse 11. In der Schließstellung befindet sich der Ventilsitz 9 in einer ersten Endstellung.

Weiterhin ist an einem dem axialen Ende 20 der Ausnehmung 16 gegenüberliegenden Ende 29 der Ausnehmung 16 ein Absatz 30 (auch Bund) des Gehäuses 1 um die Längsachse umlaufend ausgebildet. Zwischen dem Absatz 30 und dem zugewandten weiteren axialen Ende 31 des Ventilsitzes, welches dem axialen Ende 19 gegenüberliegt, ist ein Federelement 32 angeordnet, welches in der Schließstellung eine Federkraft auf den Ventilsitz 9 in Richtung des Ventilkörpers 13 aufbringt. Dadurch ist eine besonders gute Abdichtung der Ventilöffnung bewirkt. In der Schließstellung ist das Federelement 32 somit vorgespannt.

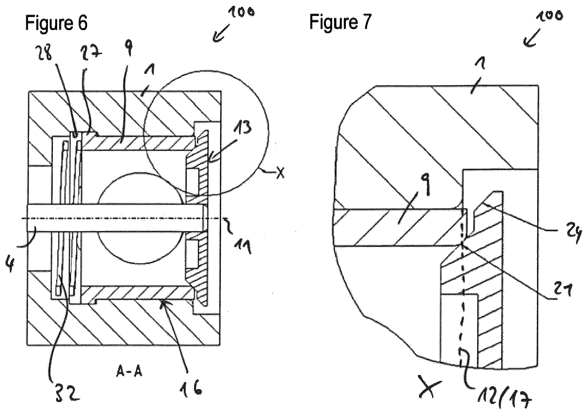

Figuren 6 und 7 zeigen einen Zwischenzustand des Ventils 100, in welchem das Federelement 32 in einem entspannten Zustand ist und der Ventilkörper 13 aus der vollständigen Schließstellung bewegt ist. In diesem Zustand ragt das axiale Ende 20 des Ventilsitzes 9, welches die Ventilöffnung 12 aufweist, aus der Ausnehmung 16 heraus. Der zweite Kontaktbereich 24 ist nicht mehr in Kontakt mit dem Gehäuse 1. In diesem Zustand schlägt der Vorsprung 27 am Gehäuse 1 in der Nut 28 auf der dem Ventilkörper 13 zugewandten Seite an. In der gezeigten Stellung befindet sich der Ventilsitz 9 in einer zweiten Endstellung.

Bei einem Schließvorgang des Ventils 100 wird der Ventilkörper 13 mittels des Stößels 4 wie beschrieben bewegt. Dabei kontaktiert der Ventilkörper 13 zunächst - wie in Figuren 6 und 7 gezeigt - den Ventilsitz 9, der aus der Ausnehmung 16 hervorsteht. Bei einem weiteren Schließen des Ventilkörpers 13 drückt dieser den Ventilsitz 9 in die Ausnehmung bis in die erste Endstellung gemäß Figuren 4 und 5 hinein. Das Federelement 32 wird dabei gespannt und bewirkt eine Federkraft gegen den Ventilkörper 13. Dadurch ist eine sichere Abdichtung der Ventilöffnung 12 gegeben. Sobald die Schließstellung erreicht ist, dichtet der Ventilkörper 13 wie beschrieben auch die zweite Ventilöffnung 17 ab.

Das Ventil 100 ermöglicht die eingangs genannten Vorteile und Funktionen.

## Patentansprüche

1. Ventil (100), insbesondere zum Öffnen und Schließen von Abgasleitungen, aufweisend
- ein Gehäuse (1),
- einen im Gehäuse (1) angeordneten Stößel (4), der mit einem Antrieb (2) koppelbar ist und ausgebildet ist, mittels des Antriebs (2) entlang einer Längsachse (11) des Stößels (4) bewegt zu werden,
- eine im Gehäuse (1) ausgebildete Ausnehmung (16),
- einen in der Ausnehmung (16) des Gehäuses (1) angeordneten Ventilsitz (9), der eine Ventilöffnung (12) begrenzt,
- eine weitere Ventilöffnung (17), die durch die im Gehäuse (1) ausgebildete Ausnehmung (16) begrenzt ist, und
- einen Ventilkörper (13), der fest mit dem Stößel (4) verbunden ist, wobei der Ventilkörper (13) so ausgebildet ist,
-- dass der Ventilkörper (13) durch eine Bewegung des Stößels (4) zwischen einer Offenstellung, in der die Ventilöffnung (12) freigegeben ist, und einer Schließstellung betätigbar ist, und
-- dass der Ventilkörper (13) in der Schließstellung an dem Ventilsitz (9) zum Verschließen der Ventilöffnung (12) und an dem Gehäuse (1) zum Verschließen der weiteren Ventilöffnung (17) jeweils abdichtend anliegt, wobei der Ventilkörper (13) einen ersten Kontaktbereich (21) aufweist, der in der Schließstellung an dem Ventilsitz (9) anliegt zur Ausbildung einer ersten Dichtung (23), und einen zweiten Kontaktbereich (24) aufweist, der in der Schließstellung an dem Gehäuse (1) anliegt zur Ausbildung einer zweiten Dichtung (26),
wobei
- der Ventilkörper (13) scheiben- oder tellerartig ausgebildet und um den Stößel (4) angeordnet ist;
- der Ventilkörper (13) auf einer den Ventilöffnungen (12, 17) zugewandten Seite stufenartig ausgebildet ist, wobei jede Stufe einen Kontaktbereich (21, 24) ausbildet;
- der Ventilsitz (9) bezüglich der Längsachse (11) des Stößels (4) relativ zu dem Stößel (4) verschiebbar gelagert ist; **dadurch gekennzeichnet, dass**
- der Ventilsitz (9) einen in radialer Richtung bezüglich der Längsachse (11) umlaufenden Vorsprung (27) aufweist, der in eine im Gehäuse (1) ausgebildete Nut (28) eingreift, wobei die Nut (28) ausgebildet ist, die Verschiebbarkeit des Ventilsitzes (9) zwischen zwei Endstellungen zu begrenzen;
- zwischen dem Ventilsitz (9) und einem der weiteren Ventilöffnung (17) gegenüberliegenden Absatz (30) des Gehäuses (1) ein Federelement (32) in der Ausnehmung (16) angeordnet ist, welches derart ausgebildet ist, dass das Federelement (32) eine Kraft auf den Ventilsitz (9) in Richtung des Ventilkörpers (13) aufbringt.

2. Ventil (100) nach Anspruch 1,
wobei der Ventilkörper (13) mit dem Stößel (4) verschweißt ist.

3. Ventil (100) nach Anspruch 1,
wobei die beiden Kontaktbereiche (21, 24) schräg zur Längsachse (11) verlaufen.

4. Ventil (100) nach einem der vorhergehenden Ansprüche, wobei in der Schließstellung der Ventilsitz (9) derart innerhalb der Ausnehmung (16) angeordnet ist, dass ein axiales Ende (19) des Ventilsitzes (9), welches die Ventilöffnung (12) aufweist, bezogen auf die Längsachse (11) beabstandet von einem axialen Ende (20) der Ausnehmung (16) des Gehäuses (1), welches die weitere Ventilöffnung (17) aufweist, ist.

5. Ventil (100) nach einem der vorhergehenden Ansprüche, wobei in einem entspannten Zustand des Federelements (32) ein axiales Ende (19) des Ventilkörpers (9), welches die Ventilöffnung (12) aufweist, aus der Ausnehmung (16) herausragt, so dass bei einem Schließvorgang des Ventils (100) zunächst der Ventilkörper (13) an dem Ventilsitz (9) anliegt und anschließend der Ventilsitz (9) gegen die Federkraft so in die Ausnehmung (16) drückbar ist, dass der Ventilkörper (13) in der Schließstellung am Gehäuse (1) zum Schließen der weiteren Ventilöffnung (17) anliegt.

## Claims

1. Valve (100), in particular for opening and closing exhaust-gas lines, having
- a housing (1),
- a plunger (4) which is arranged in the housing (1) and which can be coupled to a drive (2) and which is designed to be moved by means of the drive (2) along a longitudinal axis (11) of the plunger (4),
- a recess (16) which is formed in the housing (1),
- a valve seat (9) which is arranged in the recess (16) of the housing (1) and which delimits a valve opening (12),
- a further valve opening (17) which is delimited by the recess (16) formed in the housing (1), and
- a valve body (13) which is fixedly connected to the plunger (4), wherein the valve body (13) is designed in such a way
-- that the valve body (13) can, by way of a movement of the plunger (4), be actuated between an open position, in which the valve opening (12) is opened up, and a closed position, and
-- that, in the closed position, the valve body (13) bears in each case sealingly against the valve seat (9) so as to close off the valve opening (12) and against the housing (1) so as to close off the further valve opening (17), wherein the valve body (13) has a first contact region (21), which in the closed position bears against the valve seat (9) so as to form a first seal (23), and a second contact region (24), which in the closed position bears against the housing (1) so as to form a second seal (26),
wherein
- the valve body (13) is of disc- or plate-like form and is arranged around the plunger (4);
- the valve body (13) is of stepped form on a side facing towards the valve openings (12, 17), wherein each step forms a contact region (21, 24);
- the valve seat (9) is mounted so as to be displaceable relative to the plunger (4) with respect to the longitudinal axis (11) of the plunger (4); **characterized in that**
- the valve seat (9) has a projection (27) which runs around in a radial direction with respect to the longitudinal axis (11) and which engages into a groove (28) formed in the housing (1), wherein the groove (28) is designed to limit the displaceability of the valve seat (9) between two end positions;
- a spring element (32) is arranged in the recess (16) between the valve seat (9) and a shoulder (30), situated opposite the further valve opening (17), of the housing (1) and is designed in such a way that the spring element (32) exerts a force on the valve seat (9) in the direction of the valve body (13) .

2. Valve (100) according to Claim 1, wherein the valve body (13) is welded to the plunger (4) .

3. Valve (100) according to Claim 1, wherein the two contact regions (21, 24) extend obliquely with respect to the longitudinal axis (11) .

4. Valve (100) according to one of the preceding claims,
wherein, in the closed position, the valve seat (9) is arranged within the recess (16) in such a way that an axial end (19), having the valve opening (12), of the valve seat (9) is, in relation to the longitudinal axis (11), spaced apart from an axial end (20), having the further valve opening (17), of the recess (16) of the housing (1).

5. Valve (100) according to one of the preceding claims,
wherein, in a relaxed state of the spring element (32), an axial end (19), having the valve opening (12), of the valve body (9) protrudes from the recess (16) in such a way that, during a closing process of the valve (100), firstly the valve body (13) bears against the valve seat (9) and subsequently the valve seat (9) can be pushed, counter to the spring force, into the recess (16) in such a way that the valve body (13), in the closed position, bears against the housing (1) so as to close off the further valve opening (17).

## Revendications

1. Soupape (100), en particulier servant à ouvrir et à fermer des conduites de gaz d'échappement, comprenant
- un boîtier (1),
- un poussoir (4) disposé dans le boîtier (1), lequel poussoir peut être accouplé à un entraînement (2) et est réalisé pour être déplacé au moyen de l'entraînement (2) le long d'un axe longitudinal (11) du poussoir (4),
- un évidement (16) réalisé dans le boîtier (1),
- un siège de soupape (9) disposé dans l'évidement (16) du boîtier (1), lequel siège de soupape délimite une ouverture de soupape (12),
- une autre ouverture de soupape (17) qui est délimitée par l'évidement (16) réalisé dans le boîtier (1), et
- un corps de soupape (13) qui est relié solidement au poussoir (4), le corps de soupape (13) étant réalisé de telle sorte
-- que le corps de soupape (13) peut être actionné par un déplacement du poussoir (4) entre une position ouverte, dans laquelle l'ouverture de soupape (12) est libérée, et une position fermée, et
-- que le corps de soupape (13), dans la position de fermeture, s'appuie respectivement de manière étanche contre le siège de soupape (9) pour la fermeture de l'ouverture de soupape (12) et contre le boîtier (1) pour la fermeture de l'autre ouverture de soupape (17), le corps de soupape (13) comprenant une première région de contact (21) qui s'appuie contre le siège de soupape (9) dans la position de fermeture pour la réalisation d'un premier joint d'étanchéité (23), et comprenant une deuxième région de contact (24) qui s'appuie contre le boîtier (1) dans la position de fermeture pour la réalisation d'un deuxième joint d'étanchéité (26),
- le corps de soupape (13) étant réalisé en forme de disque ou de plateau et étant disposé autour du poussoir (4) ;
- le corps de soupape (13) étant réalisé de manière étagée sur un côté tourné vers les ouvertures de soupape (12, 17), chaque étage formant une région de contact (21, 24) ;
- le siège de soupape (9) étant monté mobile relativement au poussoir (4) par rapport à l'axe longitudinal (11) du poussoir (4) ; **caractérisé en ce que**
- le siège de soupape (9) comprend une saillie (27) périphérique dans la direction radiale par rapport à l'axe longitudinal (11), laquelle saillie vient en prise dans une rainure (28) réalisée dans le boîtier (1), la rainure (28) étant réalisée pour limiter la mobilité du siège de soupape (9) entre deux positions finales ;
- un élément ressort (32) est disposé dans l'évidement (16) entre le siège de soupape (9) et un épaulement (30) du boîtier (1) opposé à l'autre ouverture de soupape (17), lequel élément ressort est réalisé de telle sorte que l'élément ressort (32) applique une force sur le siège de soupape (9) en direction du corps de soupape (13).

2. Soupape (100) selon la revendication 1,
le corps de soupape (13) étant soudé sur le poussoir (4).

3. Soupape (100) selon la revendication 1,
les deux régions de contact (21, 24) s'étendant de manière oblique par rapport à l'axe longitudinal (11).

4. Soupape (100) selon l'une des revendications précédentes, le siège de soupape (9) étant disposé à l'intérieur de l'évidement (16) dans la position de fermeture, de telle sorte qu'une extrémité axiale (19) du siège de soupape (9), laquelle comprend l'ouverture de soupape (12), est espacée d'une extrémité axiale (20) de l'évidement (16) du boîtier (1) par rapport à l'axe longitudinal (11), laquelle comprend l'autre ouverture de soupape (17).

5. Soupape (100) selon l'une des revendications précédentes, une extrémité axiale (19) du corps de soupape (9), laquelle comprend l'ouverture de soupape (12), dépassant de l'évidement (16) dans un état détendu de l'élément ressort (32), de sorte que, lors d'une opération de fermeture de la soupape (100), tout d'abord le corps de soupape (13) s'appuie contre le siège de soupape (9) et ensuite le siège de soupape (9) peut être pressé à l'encontre de la force de ressort dans l'évidement (16), de telle sorte que le corps de soupape (13) s'appuie contre le boîtier (1) pour la fermeture de l'autre ouverture de soupape (17) dans la position de fermeture.
